# EUROPÄISCHE PATENTSCHRIFT

(11) **EP 3 347 607 B1**
(45) Veröffentlichungstag und Bekanntmachung des Hinweises auf die Patenterteilung: **04.12.2019**
(21) Anmeldenummer: 16751280.5
(22) Anmeldetag: 09.08.2016
(51) Int. Cl.: F16C 11/06, F16C 41/04, B65D 59/06, F16L 57/00

(54) **KUGELGELENK MIT EINER SCHUTZKAPPE UND ZWEIPUNKTLENKER MIT EINEM DERARTIGEN KUGELGELENK**
BALL JOINT COMPRISING A PROTECTIVE CAP AND TWO-POINT LINKAGE COMPRISING A BALL JOINT OF THIS TYPE
JOINT À ROTULE ÉQUIPÉ D'UN CAPUCHON DE PROTECTION ET BRAS DE SUSPENSION À DEUX POINTS ÉQUIPÉ D'UN TEL JOINT À ROTULE

(30) Priorität: 09.09.2015 DE 102015217217
(43) Veröffentlichungstag der Anmeldung: 18.07.2018
(73) Patentinhaber: ZF Friedrichshafen AG, 88046 Friedrichshafen (DE)
(72) Erfinder: REDDEHASE, Günter, 49448 Brockum (DE); ALTMEPPEN, Janina, 49124 Georgsmarienhütte (DE)
(86) Internationale Anmeldenummer: PCT/EP2016/068934
(87) Internationale Veröffentlichungsnummer: WO 2017/041975

(56) Entgegenhaltungen:
- EP-A2- 0 516 990
- US-A- 2 225 754
- US-A- 3 598 434
- US-A- 5 352 383

## Beschreibung

Die Erfindung betrifft ein Kugelgelenk mit einer Schutzkappe sowie einen Zweipunktlenker mit einem derartigen Kugelgelenk gemäß den Oberbegriffen der Patentansprüche 1 und 11. Schutzkappen zur bereichsweisen Abdeckung komplett montierter Kugelgelenke sind aus dem Stand der Technik, wie zum Beispiel der US 3 594 434 A1, bekannt. Aus der DE102 42 578 A1 ist eine Schutzkappe bekannt, welche in Axialrichtung auf einen Kugelzapfen eines fertig montierten Kugelgelenks aufgesteckt und zur Freigabe des Kugelzapfens wieder von diesem abgezogen werden kann. Die Innenkontur der Schutzkappe weist mindestens eine nach radial innen vorstehende, elastische Zunge auf. Ist die Schutzkappe auf den Kugelzapfen aufgesteckt, greift die elastische Zunge in ein Außengewinde eines Gewindeabschnitts des Kugelzapfens ein. Bei umlaufender Ausgestaltung ist die elastische Zunge im Gegensatz zu den wendelförmig verlaufenden Gewindegängen eines Gewindes in sich geschlossen. Die elastische Zunge ist in einer Ebene angeordnet, die sich senkrecht zu der Mittellinie der Schutzkappe erstreckt. Der Eingriff der elastischen Zunge in das Außengewinde des Gewindeabschnitts ist demzufolge nicht vollständig formschlüssig, weil die elastische Zunge keine Steigung nach Art des Außengewindes aufweist. Aus diesem Grund kann es während des Aufsteckens der Schutzkappe zu einem Verkanten der Schutzkappe gegenüber dem Kugelzapfen kommen, wenn die Mittellinien von Gewindezapfen und Schutzkappe nicht deckungsgleich sind.

Durch die Elastizität der Zunge ist eine exakt lagegenaue Positionierung der Schutzkappe in axialer Richtung des Kugelzapfens nicht sichergestellt. Die Zunge kann beim Zurücknehmen der für das Aufschieben erforderlichen Kraft aufgrund ihrer Elastizität in einen Gewindegang des Außengewindes zurückgezogen werden, wenn die Gewindespitze zu einem benachbarten Gewindegang noch nicht überschritten wurde oder die Zunge kann unbeabsichtigt weiter in einen Gewindegang hineingezogen werden, dessen Gewindespitze sie gerade überschritten hat. Bei aufgesteckter Schutzkappe ist zwischen einem konischen Abschnitt des Kugelzapfens und der Innenumfangsfläche der Schutzkappe ein umlaufender Spalt ausgebildet. Während des Aufsteckens der Schutzkappe auf den Kugelzapfen wird gleichzeitig ein stirnseitiges Ende eines Dichtungsbalges des Kugelgelenks in axialer Richtung des Kugelzapfens verschoben. Dabei wird eine Innenumfangsfläche des stirnseitigen Endes des Dichtungsbalges im Bereich einer Kontaktfläche zwischen dem konischen Abschnitt des Kugelzapfens und der vorgenannten Innenumfangsfläche an den Kugelzapfen angepresst. Diese Anpresskraft kann sich nach dem Zurücknehmen der für das Aufstecken der Schutzkappe erforderlichen Kraft in Abhängigkeit von der in diesem Zustand zufällig vorliegenden Lage der elastischen Zunge relativ zu dem Außengewinde des Kugelzapfens verändern. Eine wiederholgenaue Einstellung der Anpresskraft ist daher nicht möglich. Durch die elastische Ausbildung der Zunge ist die Kraft begrenzt, mit welcher das stirnseitige Ende des Dichtungsbalges nach erfolgtem Aufstecken der Schutzkappe in der in Axialrichtung verschobenen Lage gehalten werden kann. Die Schutzkappe ist an beiden Stirnseiten offen ausgebildet und deckt im aufgesteckten Zustand einen Dichtungsbalg des Kugelgelenks vollständig ab. Der Außenumfang der Schutzkappe ist über dessen gesamte Längserstreckung kreisförmig ausgebildet.

Aufgabe der Erfindung ist es, eine Schutzkappe bereitzustellen, welche eine exakte und wiederholgenaue Positionierung relativ zu einem Kugelzapfen eines fertig montierten Kugelgelenks ermöglicht.

Diese Aufgabe wird gemäß der vorliegenden Erfindung gelöst durch eine gattungsgemäße Schutzkappe, welche zusätzlich die kennzeichnenden Merkmale des Patentanspruchs 1 aufweist.

Bevorzugte Ausführungsformen und Weiterbildungen sind Gegenstand der Unteransprüche.

Die Erfindung sieht demnach eine Schutzkappe zur bereichsweisen Abdeckung eines komplett montierten Kugelgelenks vor. Erfindungsgemäß ist die Schutzkappe mittels eines mehrfach umlaufend ausgebildeten Innengewindes auf einen Gewindeabschnitt eines Kugelzapfens des Kugelgelenks aufschraubbar.

Unter einem komplett montierten Kugelgelenk ist im Zusammenhang mit der vorliegenden Erfindung ein Kugelgelenk zu verstehen, welches funktionstüchtig und für den Einbau in ein Fahrzeug vorbereitet ist. Der Kugelzapfen weist an einem Ende eine Gelenkkugel auf, durch welche der Kugelzapfen dreh- und schwenkbeweglich in einem Gehäuse des Kugelgelenks gelagert ist. Der Gewindeabschnitt ist vorzugsweise auf dem der Gelenkkugel gegenüberliegenden Ende des Kugelzapfens angeordnet und weist ein Außengewinde auf, welches formkorrespondierend zu dem Innengewinde der Schutzkappe ausgebildet ist. Das Innengewinde ist vorzugsweise als Feingewinde, insbesondere als Metrisches ISO-Feingewinde nach DIN 13 ausgebildet. Beispielsweise kann ein Feingewinde mit einem Außendurchmesser von 24 Millimetern und einer Gewindesteigung von einem Gewindegang zu dem nächstfolgenden Gewindegang von 1,5 Millimetern verwendet werden. Feingewinde haben den Vorteil, dass sie aufgrund ihrer im Vergleich zu Regelgewinden geringen Steigung selbsthemmend wirken, wodurch ein selbsttätiges Lösen der Schutzkappe von dem Gewindezapfen verhindert wird. Aufgrund ihrer relativ geringen Steigung bewirkt bei der Verwendung von Feingewinden eine relativ große Drehbewegung während des Aufschraubens der Schutzkappe auf den Kugelzapfen nur eine relativ geringe Bewegung in Axialrichtung. Dadurch wird bei der Verwendung einer Schutzkappe mit Feingewinde beim Aufschrauben eine Feineinstellmöglichkeit geschaffen, die ein exaktes und wiederholgenaues Positionieren der Schutzkappe auf dem Kugelzapfen ermöglicht. Unter einem mehrfach umlaufend ausgebildeten Innengewinde ist im Zusammenhang mit der Erfindung ein Gewinde zu verstehen, welches eine Steigung aufweist und dessen Gewindegänge wendelförmig über mehr als einen vollständigen Umlauf ausgebildet sind. Bevorzugt weist das Innengewinde ca. 1,5 Umläufe auf und ist somit mehrfach umlaufend auf 540 Winkelgrad in die Schutzkappe eingearbeitet.

Die Gewindegänge sind im Gegensatz zu den eingangs beschriebenen, aus dem Stand der Technik bekannten, elastischen Zungen nicht nachgiebig. Die Gewindegänge sind weiterhin vorzugsweise unterbrechungsfrei umlaufend ausgebildet. Auf diese Weise wird bezogen auf die bei aufgeschraubter Schutzkappe in Eingriff stehenden Gewindekonturen des Innengewindes der Schutzkappe und des Außengewindes des Kugelzapfens ein maximal möglicher Formschluss erreicht.

Hierdurch wird eine exakte Positionierung der Schutzkappe relativ zu dem Kugelzapfen bewirkt und ein Verkanten beider Bauteile zueinander vermieden. Die Schutzkappe weist vorzugsweise Rechtsgewinde auf, weil das korrespondierende Gewinde des Kugelzapfens ebenfalls vorzugsweise mit Rechtsgewinde versehen ist. Die Schutzkappe ist vorzugsweise einstückig ausgeführt und aus Kunststoff gebildet. Hergestellt wird die Schutzkappe vorteilhaft im Kunststoff-Spritzgussverfahren. Nach dem bestimmungsgemäßen Gebrauch weist die Schutzkappe die gleichen geometrischen und stofflichen Eigenschaften auf wie vor dem Gebrauch. Eine Mehrfachverwendung der Schutzkappe ist daher möglich.

Bevorzugt wird die Schutzkappe im Spritzgussverfahren hergestellt. Verfahrensbedingt weist die Schutzkappe daher Formtrennungsgrate auf, wie sie werkstückseitig häufig an einer Trennung von zwei Formhälften eines Spritzgusswerkzeuges vorzufinden sind. Die Formtrennungsgrate können in einer gemeinsamen Ebene mit der Mittellinie der Schutzkappe verlaufen. In diesem Fall ist die Schutzkappe vorzugsweise bis auf das Innengewinde symmetrisch ausgebildet in Bezug auf eine Ebene, die durch die Formtrennungsgrate aufgespannt wird. Alternativ kann die Schutzkappe Formtrennungsgrate aufweisen, welche in einer Ebene verlaufen, die sich senkrecht zur Mittellinie der Schutzkappe erstreckt.

Gemäß einer Weiterbildung der Erfindung weist der Außenumfang der Schutzkappe zumindest eine Angriffsgeometrie auf, welche zur formschlüssigen Einleitung eines in Richtung des Außenumfangs wirkenden Drehmoments geeignet ist. Bedingt durch die Angriffsgeometrie weicht der Außenumfang der Schutzkappe zumindest abschnittsweise von einer Kreisform ab. Die Angriffsgeometrie dient der formschlüssigen Übertragung des Drehmoments, welches zum Aufschrauben der Schutzkappe, beispielsweise von Hand oder mittels eines Hilfswerkzeuges, auf den Kugelzapfen erforderlich ist. Die formschlüssige Übertragung des Drehmoments hat den Vorteil, dass sie unabhängig von der Beschaffenheit der Außenumfangsfläche der Schutzkappe ist. Beispielsweise wirkt sich eine mit Öl verschmutzte Außenumfangsfläche der Schutzkappe bei einer formschlüssigen Drehmomentübertragung nicht negativ aus. Bei einer ausschließlich kraftschlüssigen Übertragung des Drehmoments könnte eine mit Öl verschmutzte Außenumfangsfläche dagegen zu einem Durchrutschen der Schutzkappe gegenüber einem Mittel zur Drehmomentübertragung führen.

Vorteilhaft ist die Angriffsgeometrie als ein regelmäßiges Mehrkant und/oder als zumindest ein Flügel ausgebildet. Das regelmäßige Mehrkant ist insbesondere als Zwölfkant ausgebildet. Die Übertragung des für das Auf- und Abschrauben der Schutzkappe auf den bzw. von dem Kugelzapfen erforderlichen Drehmoments kann bei dieser Ausgestaltung mit einem handelsüblichen Ringschlüssel erfolgen. Alternativ können beispielsweise auch automatisierte Schraubwerkzeuge wie Akkuschrauber mit formkorrespondierenden Werkzeugaufsätzen verwendet werden. Die Mehrkantgeometrie ist bevorzugt an einem axialen Ende der Schutzkappe angeordnet, damit diese auf einfache Weise für ein Schraubwerkzeug zugänglich ist. Darüber hinaus kann bei einer axial endseitigen Anordnung der Mehrkantgeometrie günstig ein das Mehrkant vollständig umgreifendes Schraubwerkzeug durch Überstülpen angesetzt werden. Der zumindest eine Flügel ist am Außenumfang der Schutzkappe angeordnet und erstreckt sich radial nach außen. Die Schutzkappe weist bevorzugt zwei radial gegenüberliegende Flügel auf, wobei der Begriff Flügel auf eine Ähnlichkeit mit einer Flügelmutter hinweisen soll. Die Flügel sind für ein manuelles Auf- und/oder Abschrauben der Schutzkappe auf den bzw. von dem Kugelzapfen vorgesehen, falls kein geeignetes Schraubwerkzeug zur Hand ist oder die Mehrkantgeometrie beschädigt oder nicht zugänglich sein sollte. Es hat sich als vorteilhaft erwiesen, an der Schutzkappe eine Mehrkantgeometrie und gleichzeitig auch Flügel vorzusehen, damit unabhängig von dem Vorhandensein passender Schraubwerkzeuge die Schutzkappe auf jeden Fall auf- oder abgeschraubt werden kann.

Bevorzugt ist die Schutzkappe zur Erhöhung der Steifigkeit bereichsweise durch zumindest eine Rippenstruktur verstärkt. Unter einer Rippenstruktur im Sinne der Erfindung ist eine Anordnung einzelner Verstärkungsrippen zu verstehen, die einer Wandung der Schutzkappe zugeordnet und zumindest im Wesentlichen gleichmäßig über den Umfang dieser Wandung verteilt sind. Die Rippen der Rippenstruktur sind vorzugsweise einstückig mit der Wandung ausgebildet. Die Rippenstruktur kann nur an einer Innenseite oder nur an einer Außenseite der Wandung angeordnet sein oder an der Innenseite und an der Außenseite der Wandung angeordnet sein. Die einzelnen Rippen der Rippenstruktur können sich in Axialrichtung und/oder in Umfangsrichtung der Schutzkappe erstrecken. Wenn sich die Rippen in Axialrichtung der Schutzkappe erstrecken, sind diese vorteilhaft in Axialrichtung auf gleicher Höhe angeordnet. Die Innenseite und/oder die Außenseite der Wandung kann jeweils auch mehrere Rippenstrukturen aufweisen. Die zumindest eine Rippenstruktur erhöht die Steifigkeit der Wandung der Schutzkappe zur bereichsweisen Abdeckung des komplett montierten Kugelgelenks und verbessert somit den Schutz der abgedeckten Teile des Kugelgelenks vor mechanischen Beschädigungen.

Vorteilhaft ist die Schutzkappe zur Erhöhung der Wärmeisolation bereichsweise doppelwandig ausgebildet. Hierzu weist die Schutzkappe bereichsweise eine von ihrer Wandung beabstandete zusätzliche Wandung auf, welche insbesondere konzentrisch zu der Wandung der Schutzkappe angeordnet ist. Bevorzugt wird die Wandung der Schutzkappe von der zusätzlichen Wandung umschlossen. Die Verbindung zwischen der Wandung der Schutzkappe und der zusätzlichen Wandung wird dabei vorzugsweise durch eine sich in Axialrichtung der Schutzkappe erstreckende und zwischen der Wandung der Schutzkappe und der zusätzlichen Wandung angeordnete Rippenstruktur hergestellt. Diese Rippenstruktur ist vorzugsweise sowohl einstückig mit der Wandung der Schutzkappe als auch einstückig mit der zusätzlichen Wandung ausgebildet. Die Rippen dieser Rippenstruktur nehmen insbesondere nur einen geringfügigen Teil des Zwischenraums zwischen der Wandung der Schutzkappe und der zusätzlichen Wandung ein; der größte Teil dieses Zwischenraums ist mit Luft gefüllt. Da Luft bekanntermaßen ein guter Wärmeisolator ist, wird das komplett montierte Kugelgelenk bei Einwirkung von Wärme, beispielsweise von Strahlungswärme, durch die bereichsweise doppelwandige Ausbildung der Schutzkappe wirksam vor einer Schädigung geschützt. Die zusätzliche Wandung ist vorzugsweise zwischen der Wandung der Schutzkappe und der Wärmequelle angeordnet, so dass die von der Wärmequelle abgegebene Wärme zunächst auf die zusätzliche Wandung trifft und somit die Wandung der Schutzkappe geschützt wird.

Gemäß der Erfindung weist die Schutzkappe eine sich senkrecht zu ihrer Mittellinie erstreckende, radial umlaufende erste Dichtfläche zu einem Dichtungsbalg des Kugelgelenks auf. Die erste Dichtfläche ist bevorzugt als eine Kreisringfläche ausgebildet. Die Kreisringfläche kann durch eine radial umlaufende Ausnehmung unterbrochen sein, welche bei der Herstellung der Schutzkappe im Kunststoff-Spritzgussverfahren zur Erreichung möglichst gleichmäßiger Wandstärken und zur Vermeidung von Materialanhäufungen erforderlich sein kann. In diesem Fall ist die erste Dichtfläche in zwei radial voneinander beabstandete, konzentrisch angeordnete Kreisringflächen aufgeteilt. Durch die erste Dichtfläche wird ein unerwünschtes Eindringen von Medien, insbesondere von flüssigen Medien, zumindest in einen Teil der durch die Schutzkappe abgedeckten Bereiche des komplett montierten Kugelgelenks vermieden.

Gemäß einer Weiterbildung der Erfindung weist die Schutzkappe an ihrer Innenumfangsfläche eine radial umlaufende zweite Dichtfläche gegenüber dem Kugelzapfen auf. Die zweite Dichtfläche ist insbesondere an einem freien Ende der Innenumfangsfläche angeordnet und grenzt unmittelbar an die erste Dichtfläche. In einem Axialschnitt durch die Mittellinie der Schutzkappe schließen die erste Dichtfläche und die zweite Dichtfläche vorzugsweise einen Winkel von 90 Grad ein. Die zweite Dichtfläche ist im unverformten Zustand insbesondere als Mantelfläche eines Zylinders ausgebildet, dessen Mittellinie deckungsbleich mit der Mittellinie der Schutzkappe ist und die sich in Axialrichtung der Schutzkappe erstreckt. Die eine relativ geringe axiale Erstreckung von beispielsweise einem Millimeter aufweisende zweite Dichtfläche stellt gleichzeitig eine erste Kontaktfläche zu einem konischen Abschnitt des zuvor beschriebenen Kugelzapfens dar. Während der Montage der Schutzkappe berührt die zweite Dichtfläche im unverformten Zustand den konischen Abschnitt zunächst in einem umlaufenden Linienzug, welcher insbesondere als Kreislinie ausgebildet und an dem vorgenannten freien Ende der Innenumfangsfläche angeordnet ist. Beim Aufschrauben der Schutzkappe wird diese relativ zu dem Kugelzapfen in Axialrichtung verlagert. Dabei erweitert sich der Durchmesser des konischen Abschnitts des Kugelzapfens mit fortschreitendem Aufschrauben stetig.

Da die zweite Dichtfläche nach Art einer Zylindermantelfläche ausgebildet ist, kommt es bei weiter fortschreitendem Aufschrauben der Schutzkappe zu einem umlaufenden Flächenkontakt zwischen dem konischen Abschnitt des Kugelzapfens und der zweiten Dichtfläche der Schutzkappe. Dabei wird die zweite Dichtfläche, die im unverformten Zustand als Mantelfläche eines Zylinders ausgebildet ist, geringfügig verformt, um sich letztendlich vollflächig an den konischen Abschnitt des Kugelzapfens anzulegen. Auf diese Weise stellt die zweite Dichtfläche eine weitere Sicherung gegen das unerwünschte Eindringen von Medien, insbesondere von korrosiv wirkenden, flüssigen Medien, zumindest in einen Teil der durch die Schutzkappe abgedeckten Bereiche des komplett montierten Kugelgelenks dar.

Bevorzugt bildet die zweite Dichtfläche einen Endanschlag für das Aufschrauben der Schutzkappe auf den Kugelzapfen. Wenn die zweite Dichtfläche vollumfänglich an dem Kugelzapfen anliegt, ist ein weiteres Aufschrauben der Schutzkappe nicht mehr möglich. Auf diese Weise bildet die zweite Dichtfläche einen Endanschlag für das Aufschrauben der Schutzkappe. Die zweite Dichtfläche fungiert somit als Dichtfläche und gleichzeitig auch als Anschlagfläche. Durch die zuvor beschriebene Feingewindeverbindung zwischen dem Außengewinde des Kugelzapfens und dem Innengewinde der Schutzkappe kann beim Aufschrauben der Schutzkappe auf den Kugelzapfen mit einem relativ geringen Drehmoment in der Endanschlagsposition eine relativ hohe Dichtkraft erreicht werden. Die Schutzkappe kann daher auch ohne zusätzliche Werkzeuge von Hand aufgeschraubt werden. Nachdem beim Aufschrauben der Schutzkappe der Endanschlag erreicht wurde und das für das Aufschrauben der Schutzkappe erforderliche Drehmoment nicht mehr anliegt, verbleibt die Schutzkappe aufgrund der zuvor beschriebenen Selbsthemmung der Feingewindeverbindung in der Endanschlagsposition.

Vorteilhaft weist die Schutzkappe zumindest eine Ablauföffnung auf. Die zumindest eine Ablauföffnung durchdringt die Wandung der Schutzkappe bevorzugt in einem oberen Abschnitt, welcher sich zwischen der ersten Dichtfläche und einer Montageöffnung der Schutzkappe erstreckt. Bevorzugt weist die Schutzkappe mehrere Ablauföffnungen auf, die in einer gedachten Ebene senkrecht zu der Mittellinie der Schutzkappe gleichmäßig über den Umfang der Schutzkappe verteilt sind. Durch die Montageöffnung, die eine Stirnseite der Schutzkappe bildet und die bevorzugt den größten Innendurchmesser der Schutzkappe aufweist, wird das komplett montierte Kugelgelenk aufgenommen, welches durch die Schutzkappe abgedeckt werden soll. Die Mittelachsen der Ablauföffnungen erstrecken sich bevorzugt parallel oder in einer Ebene senkrecht zu der Mittellinie der Schutzkappe. Die Ablauföffnungen, welche vorzugsweise zylinderförmig ausgebildet sind, dienen dem Ablauf von insbesondere fluiden Medien, wie beispielsweise korrosiv wirkenden Reinigungsmedien aus Oberflächen-Vorbehandlungsanlagen, welche während des Produktionsprozesses in den oberen Abschnitt der Schutzkappe gelangen können. Bevorzugt ist die Schutzkappe ohne Berücksichtigung des Innengewindes, der Angriffsgeometrien, der Rippenstrukturen und der Ablauföffnungen rotationssymmetrisch ausgebildet.

Die Schutzkappe ist in einem unteren Abschnitt, welcher sich von der ersten Dichtfläche bis zu einem stirnseitigen Boden der Schutzkappe erstreckt, vollständig geschlossen ausgebildet. Der Boden ist der Montageöffnung in Axialrichtung gegenüberliegend angeordnet. Durch die vollständig geschlossene Ausbildung des unteren Abschnitts der Schutzkappe wird in Verbindung mit der ersten und der zweiten Dichtfläche verhindert, dass während des Produktionsprozesses bei aufgeschraubter Schutzkappe fluide Medien, wie beispielsweise korrosiv wirkenden Reinigungsmedien aus Oberflächen-Vorbehandlungsanlagen, an den durch den unteren Abschnitt abgedeckten Bereich des Kugelzapfens gelangen können. Dies ist insbesondere von Vorteil, weil der Kugelzapfen in diesem Bereich häufig metallisch blank und nur leicht eingeölt vorliegt und somit keinen oder keinen besonders wirkungsvollen Korrosionsschutz aufweist. Der Boden ist insbesondere unterbrechungsfrei durchgehend und mit gleichmäßiger Wandstärke ausgebildet. Die Erfindung umfasst weiterhin die Verwendung einer Schutzkappe wie zuvor beschrieben als Montage-, Lackier-, Transport- oder Wärmeschutzkappe. Durch diese Verwendungsarten wird es möglich, dieselbe Schutzkappe während der Montage des Kugelgelenks einmalig zur bereichsweisen Abdeckung eines komplett montierten Kugelgelenks aufzuschrauben, dann aufgeschraubt durch die Montage sowie anschließend durch nachgeschaltete Oberflächenbehandlungsanlagen mit Vorbehandlungsstufen und Lackierstufen laufen zu lassen und abschließend als Transportschutz für den Versand zum Kunden zu verwenden. Dies stellt einen großen wirtschaftlichen Vorteil gegenüber der Verwendung von separaten Spezialschutzkappen für einzelne Herstellungs- oder Transportschritte und dem jeweils damit verbundenen Handlingsaufwand dar. Ist die Schutzkappe zur Erhöhung der Wärmeisolation bereichsweise doppelwandig ausgebildet, kann sie darüber hinaus als Wärmeschutzkappe verwendet werden.

Die Erfindung schlägt weiterhin ein Kugelgelenk mit einem Kugelzapfen vor, wobei eine Schutzkappe, wie zuvor beschrieben, auf einen Gewindeabschnitt des Kugelzapfens aufgeschraubt ist. Bei dem Kugelgelenk handelt es sich insbesondere um ein komplett montiertes Kugelgelenk, welches funktionstüchtig und für den Einbau in ein Fahrzeug vorbereitet ist. Wie bereits ausgeführt, weist der Gewindeabschnitt des Kugelzapfens, welcher bevorzugt aus Stahl gebildet ist, ein Außengewinde auf. Die Längserstreckung des Außengewindes in Richtung der Mittelachse des Kugelgelenks ist größer als die Längserstreckung des Innengewindes der Schutzkappe in gleicher Richtung. Der Innendurchmesser des Bereichs der Schutzkappe, welcher das Außengewinde umgibt und nicht Bestandteil des Innengewindes ist, ist bevorzugt 0,1 bis 0,7 Millimeter größer ausgebildet als der Außendurchmesser des Außengewindes des Gewindeabschnitts. Durch diese relativ enge Führung wird sichergestellt, dass die Schutzkappe während des Aufschraubens auf den Gewindeabschnitt des Kugelzapfens nicht verkanten kann. Die Innenseite des Bodens der Schutzkappe ist bei aufgeschraubter Schutzkappe bevorzugt von der gegenüberliegenden Stirnseite des Kugelzapfens beabstandet. Durch diesen Freigang ist sichergestellt, dass die zweite Dichtfläche einen Endanschlag für das Aufschrauben der Schutzkappe auf den Kugelzapfen bilden kann. Auf diese Weise ist eine exakte und wiederholgenaue Positionierung der Schutzkappe relativ zu dem Kugelzapfen des fertig montierten Kugelgelenks möglich. Die Wiederholgenauigkeit beim Aufschrauben der Schutzkappe kann durch die Verwendung von Schraubwerkzeugen mit einer Einrichtung zur Vorabeinstellung des aufzubringenden Drehmoments noch erhöht werden.

In vorteilhafter Ausgestaltung weist das Kugelgelenk einen Dichtungsbalg auf, wobei die aufgeschraubte Schutzkappe einen Teil des Dichtungsbalges freigibt. Der Dichtungsbalg ist bevorzugt rotationssymmetrisch ausgebildet und mit einem stirnseitigen Endabschnitt durch einen Spannring an einem Gehäuse des Kugelgelenks festgelegt. Dieser stirnseitige Endabschnitt des Dichtungsbalges wird zusammen mit dem Spannring nicht durch die Schutzkappe abgedeckt, damit der Spannring während eines Lackierschrittes mit einem zusätzlichen Oberflächenschutz versehen werden kann, ohne dass hierzu die Schutzkappe abgeschraubt werden muss. Das Gehäuse des Kugelgelenks ist insbesondere einstückig mit einem Schaft zur Anbindung des Kugelgelenks an ein Verbindungsrohr eines Zweipunktlenkers ausgebildet. Der Schaft kann eine zumindest teilweise umlaufende Wellenkontur zur Verbindung des Kugelgelenks mit dem Verbindungsrohr oder ein Außengewinde zur verstellbaren Verbindung des Kugelgelenks mit dem Verbindungsrohr aufweisen.

Gemäß einer Weiterbildung der Erfindung wird der Dichtungsbalg bei aufgeschraubter Schutzkappe durch diese, insbesondere durch die erste Dichtfläche der Schutzkappe, in Montageposition gehalten. Wie zuvor beschrieben, weist der Kugelzapfen einen konischen Abschnitt auf, welcher sich in Richtung des Gewindeabschnitts verjüngt. An dem Außenumfang dieses konischen Abschnitts liegt ein unterer Endabschnitt des Dichtungsbalges an, welcher untere Endabschnitt dem an dem Gehäuse festgelegten Endabschnitt des Dichtungsbalges gegenüberliegt. Die Innenwandung des unteren Endabschnitts berührt den konischen Abschnitt des Kugelzapfens unter Ausbildung einer zweiten Kontaktfläche. Die erste Dichtfläche der Schutzkappe liegt unter Ausbildung einer dritten Kontaktfläche an einer stirnseitigen Fläche des unteren Endabschnitts des Dichtungsbalges an, wobei die stirnseitige Fläche eine Labyrinthdichtung aufweisen kann. Die bereits zuvor beschriebene erste Kontaktfläche, in welcher die zweite Dichtfläche dichtend an dem Außenumfang des konischen Abschnitts des Kugelzapfens anliegt, grenzt an die zweite Kontaktfläche und ist im Wesentlichen in Verlängerung zu dieser angeordnet. Die erste und die zweite Kontaktfläche sind zumindest im Wesentlichen rechtwinklig zu der dritten Kontaktfläche angeordnet, wobei sich jeweils ein Ende der ersten, der zweiten und der dritten Kontaktfläche in einem Punkt treffen.

Der Dichtungsbalg wird durch die erste Dichtfläche in Montageposition gehalten. Damit ist gemeint, dass der untere Endabschnitt des Dichtungsbalges durch das Aufschrauben der Schutzkappe mittels der ersten Dichtfläche in Axialrichtung in Richtung des sich erweiternden konischen Abschnitts des Kugelzapfen gedrückt wird, um auf diese Weise die Lage des unteren Endabschnitts des Dichtungsbalges im späteren Einbauzustand im Fahrzeug zu simulieren. Würde man die Schutzkappe wieder abschrauben, würde sich der untere Endabschnitt des Dichtungsbalges entspannen und in Richtung der Verjüngung des konischen Abschnitts des Kugelzapfens verschieben. Dadurch wäre die Berührung der Innenwandung des unteren Endabschnitts des Dichtungsbalges und des konischen Abschnitts des Kugelzapfens in der zweiten Kontaktfläche aufgehoben und es entstünde an dieser Stelle ein umlaufender Spalt, in den insbesondere Feuchtigkeit eindringen könnte, was mit hoher Wahrscheinlichkeit zu einem vorzeitigen Ausfall des Kugelgelenks im Fahrbetrieb führen würde. Der Bereich des konischen Abschnitts, welcher sich aus dem Dichtungsbalg heraus erstreckt und der Gewindeabschnitt des Kugelzapfens weisen insbesondere metallisch blanke oder leicht gefettete Oberflächen auf. Zum Schutz dieser Oberflächen vor Korrosion, insbesondere hervorgerufen durch den Kontakt mit korrosiv wirkenden, flüssigen Medien, ist die Schutzkappe zwischen der ersten Dichtfläche und dem Boden vollständig geschlossen ausgebildet.

Die Erfindung schlägt ebenfalls einen Zweipunktlenker mit zumindest einem Kugelgelenk wie zuvor beschrieben vor. Der Zweipunktlenker zeichnet sich dadurch aus, dass er als Lenkstange, Spurstange, Stabilisator-Verbindungsstange, Bediengestänge oder Panhardstab ausgebildet ist. Insbesondere weist der Zweipunktlenker an jedem seiner beiden Enden ein Kugelgelenk mit einer Schutzkappe wie zuvor beschrieben auf. Beim Transport derartiger Zweipunktlenker, welche häufig recht sperrig ausgebildet sind, besteht ein erhöhtes Risiko in Bezug auf mechanische Beschädigungen der endseitig angeordneten Kugelgelenke. Durch die zuvor beschriebene zumindest eine Rippenstruktur bietet die Schutzkappe einen weitreichenden Schutz gegenüber mechanischen Beschädigungen der durch die Schutzkappe abgedeckten Bereiche des komplett montierten Kugelgelenks. Durch die auf den Kugelzapfen aufgeschraubte Schutzkappe wird darüber hinaus die Verletzungsgefahr während des Transports der Zweipunktlenker reduziert, weil das Außengewinde des Kugelzapfens abgedeckt ist.

Die Schutzkappe wird im Rahmen der Montage des Kugelgelenks auf den Kugelzapfen geschraubt und verbleibt auch während der Montage des Zweipunktlenkers auf dem Kugelzapfen. Anschließend durchläuft der komplettierte Zweipunktlenker bevorzugt hängend eine Vorbehandlungsanlage, in welcher die komplette Oberfläche des Zweipunktlenkers einschließlich endseitig montierter Kugelgelenke teilweise mit erhöhtem Druck mit wässrigen Reinigungs- und Entfettungsmedien beaufschlagt wird. Es schließen sich Spülvorgänge und eine Phosphatierung auf wässriger Basis an. Hierbei bieten die zuvor beschriebenen Abdichtungen im Bereich der ersten, der zweiten und der dritten Kontaktfläche einen sicheren Schutz gegen das Eindringen der vorgenannten fluiden Medien bis an die blanke oder nur leicht gefettete Oberfläche des Kugelzapfens. Wässrige Medien, die sich während der Vorbehandlung des Zweipunktlenkers in dem oberen Abschnitt der Schutzkappe gesammelt haben, können durch die Ablauföffnungen entweichen. Der obere Abschnitt der Schutzkappe bietet während der anschließenden Sprühlackierung einen weitgehenden Schutz gegen einen Niederschlag des Sprühnebels auf dem Dichtungsbalg. Die Schutzkappe verbleibt bevorzugt auch während des Versandfertigmachens und des anschließenden Transports zum Kunden auf dem Kugelzapfen. Hier ist ebenfalls der vollständig geschlossene untere Abschnitt der Schutzkappe von Vorteil, weil er den Kugelzapfen beispielsweise während eines Seetransports vor korrosiv wirkender Seeluft schützt. Die Schutzkappe wird erst unmittelbar vor dem Verbau des Zweipunktlenkers im Fahrzeug, beispielsweise in einem Lastwagen oder einem Bus, wieder abgeschraubt.

Im Folgenden wird die Erfindung anhand lediglich Ausführungsbeispiele darstellender Zeichnungen näher erläutert, wobei sich gleiche Bezugszeichen auf gleiche Bauteile oder Elemente beziehen. Dabei zeigt:
- Fig. 1: in einer perspektivischen Darstellung eine Schutzkappe gemäß einer ersten Ausführungsform der Erfindung;
- Fig. 2: in einer Schnittdarstellung die Schutzkappe aus Figur 1;
- Fig. 3a: eine vergrößerte Detailansicht der Einzelheit X aus Figur 2, wobei die Schutzkappe leicht um deren Mittelachse gedreht ist;
- Fig. 3b: eine Detailansicht gemäß Figur 3a, ergänzt um einen Kugelzapfen;
- Fig. 4: in einer perspektivischen Darstellung eine Schutzkappe gemäß einer zweiten Ausführungsform der Erfindung;
- Fig. 5: in einer Schnittdarstellung ein Kugelgelenk mit einer Schutzkappe gemäß der ersten Ausführungsform;
- Fig. 6: eine vergrößerte Detailansicht der Einzelheit Y aus Figur 5;
- Fig. 7: in einer teilweise geschnittenen Darstellung einen Zweipunktlenker mit endseitig angeordneten Kugelgelenken.

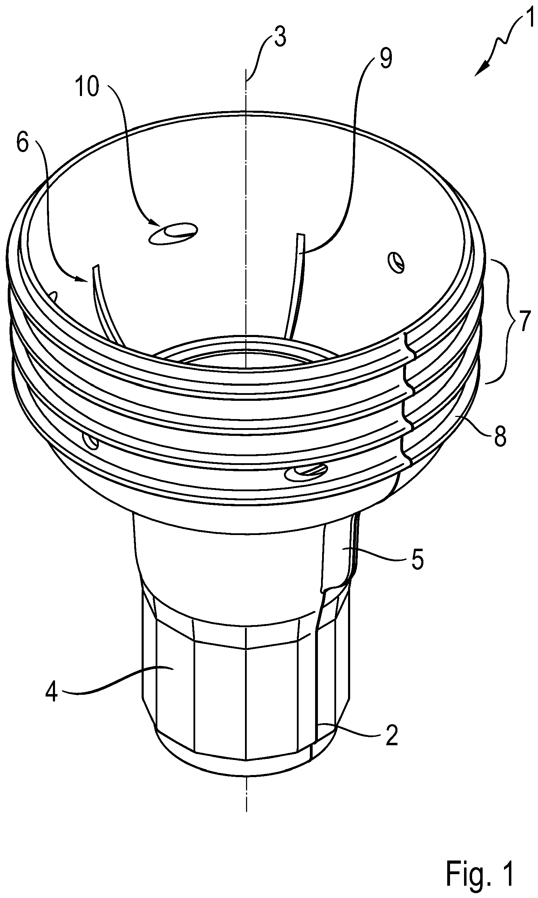

Fig. 1 zeigt eine erste Ausführungsform einer einstückig ausgebildeten Schutzkappe 1, welche aus Kunststoff im Kunststoff-Spritzgussverfahren hergestellt ist. Verfahrensbedingt weist die Schutzkappe 1 einen Formtrennungsgrat 2 auf, welcher in einer gemeinsamen Ebene mit der Mittellinie 3 der Schutzkappe 1 verläuft. Die Schutzkappe weist zur formschlüssigen Einleitung eines in Richtung des Außenumfangs der Schutzkappe 1 wirkenden Drehmoments eine Angriffsgeometrie auf, welche als ein regelmäßiges Mehrkant, vorliegend ein Zwölfkant 4, und ein Paar radial gegenüberliegender Flügel 5 ausgebildet ist, wobei ein Flügel verdeckt ist. Die Zwölfkant-Angriffsgeometrie 4 ist für ein Auf- und Abschrauben der Schutzkappe 1 mit einem Schraubwerkzeug vorgesehen und die Flügel 5 für ein manuelles Auf- und Abschrauben. Zur Erhöhung ihrer Steifigkeit ist die Schutzkappe durch zwei Rippenstrukturen 6, 7 verstärkt, wobei die beiden Rippenstrukturen 6, 7 jeweils aus einer Mehrzahl einzelner Rippen 8, 9 gebildet sind. Für den Einsatz in einer Vorbehandlungsanlage, welche mit Reinigungs- und Spülmedien auf wässriger Basis arbeitet, sowie einer Phosphatierungsanlage ist die Schutzkappe 1 mit mehreren Ablauföffnungen 10 versehen, die einen Ablauf fluider Medien im Rahmen des Herstellungsprozesses ermöglichen.

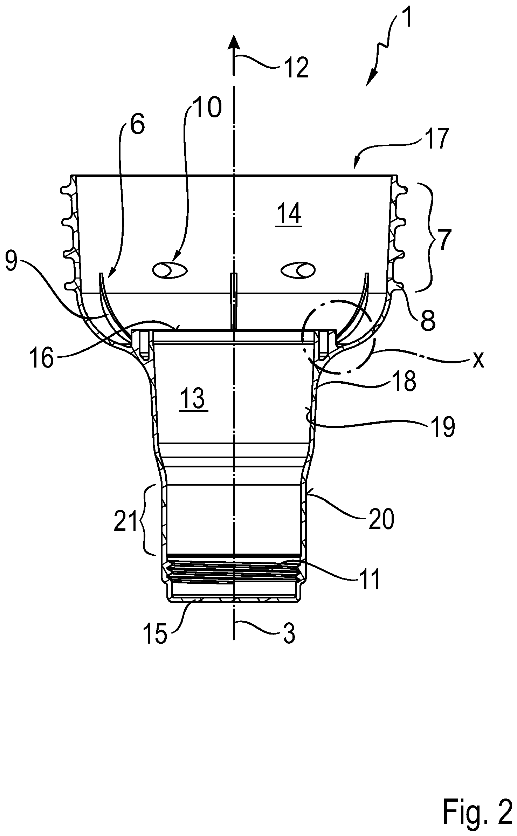

In Fig. 2 ist zu erkennen, dass die Schutzkappe 1 ein mehrfach umlaufend ausgebildetes Innengewinde 11 aufweist. Bei dem Innengewinde 11 handelt es sich um ein rechtsgängiges Feingewinde, welches unterbrechungsfrei umlaufend über ca. 1,5 Gewindegänge ausgebildet ist. In Axialrichtung 12 der Schutzkappe 1 grenzt ein unterer Abschnitt 13, in welchem das Innengewinde 11 angeordnet ist, an einen oberen Abschnitt 14 der Schutzkappe. Der untere Abschnitt 13, welcher vollständig geschlossen ausgebildet ist, weist an einem stirnseitigen Ende der Schutzkappe 1 einen Boden 15 auf. Der obere Abschnitt 14, welcher von dem unteren Abschnitt 13 durch eine erste Dichtfläche 16 getrennt ist, weist in Axialrichtung 12 stirnseitig und gegenüberliegend zu dem Boden 15 eine Montageöffnung 17 auf. Die insgesamt becherförmig ausgebildete Schutzkappe 1 mit einer umlaufenden Wandung 18 weist in dem oberen Abschnitt 14 die die Wandung 18 durchdringenden Ablauföffnungen 10 auf, welche gleichmäßig über den Umfang der Schutzkappe verteilt sind. Der obere Abschnitt 14 ist an der Innenumfangsfläche 19 der Wandung 18 durch die aus mehreren gleichmäßig über den Umfang verteilten und sich in Axialrichtung 12 erstreckenden Rippen 9 gebildete Rippenstruktur 6 verstärkt, wobei die Rippen 9 einstückig mit der Wandung 18 ausgebildet sind. Darüber hinaus ist der obere Abschnitt 14, welcher gegenüber dem unteren Abschnitt 13 im Durchmesser erweitert ausgebildet ist, durch die weitere Rippenstruktur 7 verstärkt. Diese weitere Rippenstruktur 7 ist aus mehreren an der Außenumfangsfläche 20 der Wandung 18 angeordneten und einstückig mit dieser verbundenen Rippen 8 gebildet. Die Rippen 8 sind in Umfangsrichtung der Schutzkappe 1 umlaufend ausgebildet und in Axialrichtung 12 in parallel beabstandeten Ebenen angeordnet, welche sich senkrecht zu der Mittellinie 3 der Schutzkappe 1 erstrecken. Der untere Abschnitt 13 weist auf der dem Boden 15 gegenüberliegenden Seite des Innengewindes 11 einen hohlzylindrischen Abschnitt 21 auf, dessen Innendurchmesser ca. 0,3 Millimeter größer ausgebildet ist als der Außendurchmesser des Innengewindes 11.

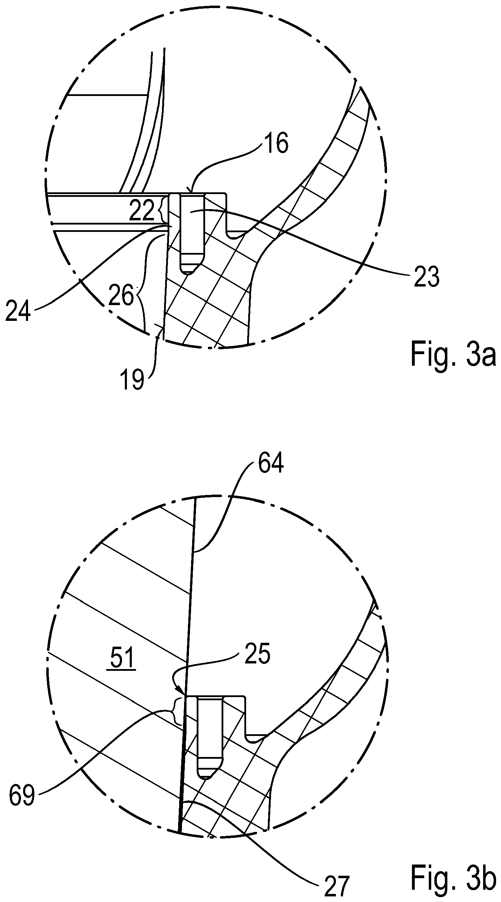

Fig. 3a ist zu entnehmen, dass an einem freien Ende der Innenumfangsfläche 19 eine zweite Dichtfläche 22 angeordnet ist, welche sich radial umlaufend erstreckt. Die erste Dichtfläche 16 ist als eine Kreisringfläche ausgebildet, welche durch eine radial umlaufende Ausnehmung 23 unterbrochen ist. Daher ist die erste Dichtfläche 16 in zwei radial voneinander beabstandete, konzentrisch angeordnete Kreisringflächen aufgeteilt. Die innere dieser beiden Kreisringflächen ist Teil der Oberfläche eines ringartig umlaufenden Steges 24, welcher einstückiger Bestandteil der Schutzkappe 1 ist und zwischen der Innenumfangsfläche 19 und der Ausnehmung 23 angeordnet ist. Durch eine relativ geringe Wandstärke von 0,8 Millimeter im Bereich der zweiten Dichtfläche 22 weist der Steg 24 eine gewisse Elastizität auf. Dadurch kann sich die zweite Dichtfläche 22, welche ebenfalls Teil der Oberfläche des Steges 24 ist, sehr gut dichtend an einen im Zusammenbauzustand benachbart angeordneten Kugelzapfen 51 anschmiegen. In axialer Erstreckung der Innenumfangsfläche 19 der Schutzkappe 1 schließt sich an die zweite Dichtfläche 22, getrennt durch einen Übergangsradius, ein konischer Abschnitt 26 an.

Zur Veranschaulichung zeigt Fig. 3b die bereits in Fig. 3a vorgestellte Anordnung ergänzt um den Kugelzapfen 51. Die eine relativ geringe axiale Erstreckung von einem Millimeter aufweisende zweite Dichtfläche 22 stellt gleichzeitig eine erste Kontaktfläche 69 zu einem konischen Abschnitt 64 des Kugelzapfens 51 dar. Während der Montage der Schutzkappe 1 wird diese durch das Aufschrauben auf den Kugelzapfen 51 in Axialrichtung 12 relativ zu dem Kugelzapfen 51 verlagert. Dabei berührt die zunächst noch unverformte zweite Dichtfläche 22 der Schutzkappe 1 den konischen Abschnitt 64 als erstes mit dem freien Ende der Innenumfangsfläche 19 in einem umlaufenden Linienzug, welcher als Kreislinie 25 ausgebildet ist. Mit fortschreitendem Aufschrauben wird dabei der Durchmesser des konischen Abschnitts 64 des Kugelzapfens 51 stetig größer. Da die zweite Dichtfläche 22 als Zylindermantelfläche mit einer gewissen Elastizität ausgebildet ist, kommt es bei weiter fortschreitendem Aufschrauben der Schutzkappe 1 zu einem umlaufenden Flächenkontakt zwischen der zweiten Dichtfläche 22 der Schutzkappe 1 und dem konischen Abschnitt 64 des Kugelzapfens 51. Dabei wird die zweite Dichtfläche 22, die im unverformten Zustand als Zylindermantelfläche ausgebildet ist, im Wesentlichen elastisch zu einer Kegelmantelfläche verformt, welche sich formkorrespondierend an den konischen Abschnitt 64 des Kugelzapfens 51 anlegt. In diesem Zusammenbauzustand ist der konische Abschnitt 26 der Schutzkappe 1 von dem konischen Abschnitt 64 des Kugelzapfens 51 durch einen umlaufenden Ringspalt 27 getrennt. Die an dem konischen Abschnitt 64 des Kugelzapfens 51 anliegende zweite Dichtfläche 22 fungiert somit gleichzeitig als Endanschlag für das Aufschrauben der Schutzkappe 1 auf den Kugelzapfen 51. Obwohl der Steg 24 einerseits eine gewisse Elastizität aufweist, die die vollflächige Anlage der zweiten Dichtfläche 22 an den konischen Abschnitt 64 des Kugelzapfens 51 ermöglicht, bewirkt die ringartig geschlossene Ausbildung des Steges 24 eine minimale Nachgiebigkeit in Bezug auf die Funktion der zweiten Dichtfläche 22 als Endanschlag.

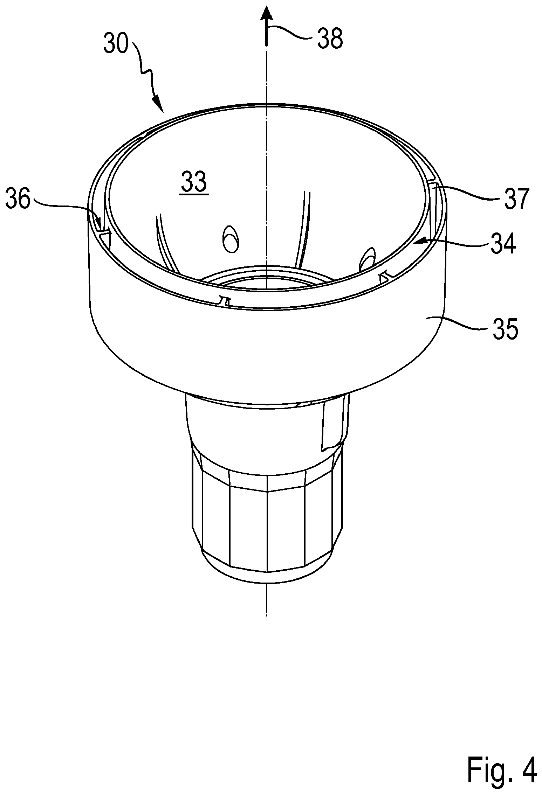

In Fig. 4 ist eine Schutzkappe 30 gemäß einer zweiten Ausführungsform gezeigt. In ihrem oberen Abschnitt 33 ist die Wandung 34 der Schutzkappe 30 zur Verbesserung der Wärmeisolation durch eine konzentrisch und beabstandet zu der Wandung 34 angeordnete zusätzliche Wandung 35 umgeben, wobei die zusätzliche Wandung 35 als Zylinderring ausgebildet ist. Der ebenfalls Zylinderring-förmige Zwischenraum zwischen der Wandung 34 und der zusätzlichen Wandung 35 wird durch eine Rippenstruktur 36 überbrückt, deren Rippen 37 sich in Axialrichtung 38 der Schutzkappe 30 erstrecken und gleichmäßig über den Umfang verteilt sind. Der weitere Aufbau der Schutzkappe 30 entspricht der zuvor beschriebenen und in Fig. 1 bis Fig. 3 dargestellten ersten Ausführungsform.

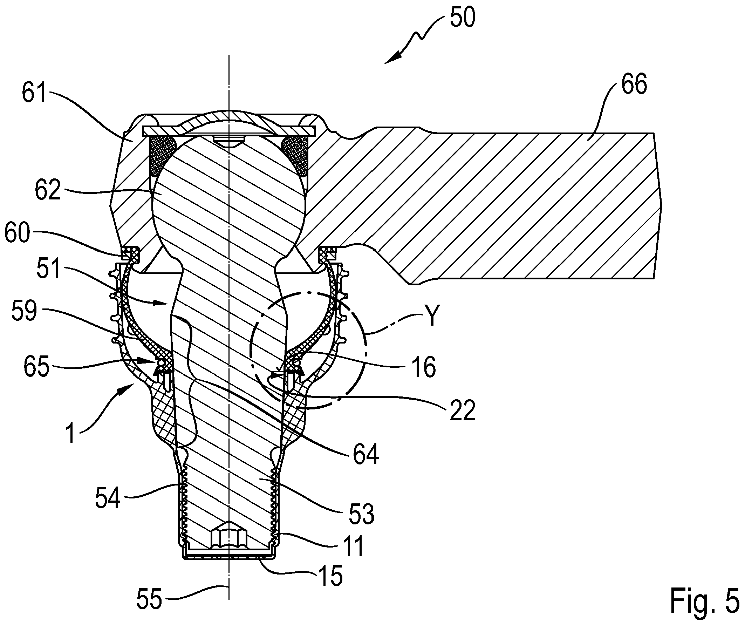

Fig. 5 zeigt ein als Radialkugelgelenk ausgebildetes Kugelgelenk 50 mit dem Kugelzapfen 51, wobei eine Schutzkappe 1 gemäß der ersten Ausführungsform wie zuvor beschrieben auf einen Gewindeabschnitt 53 des Kugelzapfens 51 aufgeschraubt ist. Es ist alternativ auch möglich, eine Schutzkappe gemäß der zweiten Ausführungsform auf den Gewindeabschnitt 53 des Kugelzapfens 51 aufzuschrauben. Bei dem Kugelgelenk 50 handelt es sich um ein komplett montiertes Kugelgelenk, welches funktionstüchtig und für den Einbau in ein Fahrzeug vorbereitet ist. Der Gewindeabschnitt des Kugelzapfens 51 weist ein Außengewinde 54 auf. Die Erstreckung des Außengewindes 54 in Richtung der Mittelachse 55 des Kugelgelenks 51 ist größer als die Erstreckung des Innengewindes 11 der Schutzkappe 1 in gleicher Richtung. Das Außengewinde 54 und das Innengewinde 11 sind formkorrespondierend zueinander und als rechtsgängige Feingewinde ausgebildet. Der Innendurchmesser des Bereichs der Schutzkappe 1, welcher das Außengewinde 54 umgibt und nicht Bestandteil des Innengewindes 11 ist, ist 0,3 Millimeter größer ausgebildet als der Außendurchmesser des Außengewindes 54 des Gewindeabschnitts 53. Durch diese relativ enge Führung wird sichergestellt, dass die Schutzkappe 1 während des Aufschraubens auf den Gewindeabschnitt 53 des Kugelzapfens 51 nicht verkanten kann. Die Innenseite des Bodens 15 der Schutzkappe 1 ist bei aufgeschraubter Schutzkappe 1 von einer gegenüberliegenden Stirnseite des Kugelzapfens 51 beabstandet. Durch diesen Freigang ist sichergestellt, dass die zweite Dichtfläche 22 einen Endanschlag für das Aufschrauben der Schutzkappe 1 auf den Kugelzapfen 51 bilden kann.

Das Kugelgelenk 50 weist einen Dichtungsbalg 59 auf, wobei die aufgeschraubte Schutzkappe 1 einen Teil des Dichtungsbalges 59 freigibt. Der Dichtungsbalg 59 ist rotationssymmetrisch ausgebildet und mit einem stirnseitigen Endabschnitt durch einen Spannring 60 an einem Gehäuse 61 des Kugelgelenks 50 festgelegt. Dieser stirnseitige Endabschnitt des Dichtungsbalges 59 wird zusammen mit dem Spannring 60 nicht durch die Schutzkappe 1 abgedeckt, damit der Spannring 60 während eines Lackierschrittes mit einem zusätzlichen Oberflächenschutz versehen werden kann, ohne dass hierzu die Schutzkappe 1 abgeschraubt werden muss. Der Kugelzapfen 51 weist an einem Ende eine Gelenkkugel 62 auf, welche dreh- und schwenkbeweglich in dem Gehäuse 61 des Kugelgelenks 50 gelagert ist. Der Gewindeabschnitt 53 ist auf dem der Gelenkkugel 62 gegenüberliegenden Ende des Kugelzapfens 51 angeordnet. Das Gehäuse 61 des Kugelgelenks 50 ist einstückig mit einem Schaft 66 zur Anbindung des Kugelgelenks 50 an ein Verbindungsrohr 83 eines Zweipunktlenkers 80 ausgebildet.

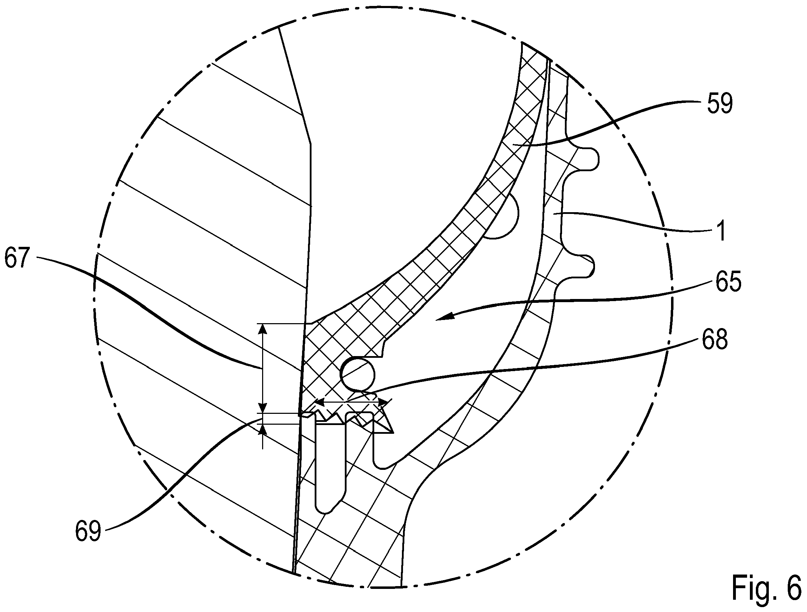

Der Dichtungsbalg 59 wird bei aufgeschraubter Schutzkappe 1 durch diese, insbesondere durch die erste Dichtfläche 16 der Schutzkappe 1, in Montageposition gehalten. Der konische Abschnitt 64 des Kugelzapfens 51 verjüngt sich in Richtung des Gewindeabschnitts 53. An dem Außenumfang dieses konischen Abschnitts 64 liegt ein unterer Endabschnitt 65 des Dichtungsbalges 59 an, welcher untere Endabschnitt 65 dem an dem Gehäuse 61 festgelegten Endabschnitt des Dichtungsbalges 59 gegenüberliegt. Die Innenwandung des unteren Endabschnitts 65 berührt den konischen Abschnitt 64 des Kugelzapfens 51 unter Ausbildung einer zweiten Kontaktfläche 67. Die erste Dichtfläche 16 der Schutzkappe 1 liegt unter Ausbildung einer dritten Kontaktfläche 68 an einer stirnseitigen Fläche des unteren Endabschnitts 65 des Dichtungsbalges 59 an Die stirnseitige Fläche weist eine Labyrinthdichtung auf, die in entspanntem Zustand dargestellt ist und daher mit der ersten Dichtfläche 16 überlappt. Die erste Kontaktfläche 69, in welcher die zweite Dichtfläche 22 dichtend an dem Außenumfang des konischen Abschnitts 64 des Kugelzapfens 51 anliegt, grenzt an die zweite Kontaktfläche 67 und ist im Wesentlichen in Verlängerung zu dieser angeordnet. Die erste Kontaktfläche 69 und die zweite Kontaktfläche 67 sind zumindest im Wesentlichen rechtwinklig zu der dritten Kontaktfläche 68 angeordnet, wobei sich jeweils ein Ende der in Fig. 6 gezeigten ersten 69, zweiten 67 und dritten Kontaktfläche 68 in einem Punkt treffen. Zum Schutz der sich aus dem Dichtungsbalg 59 heraus erstreckenden Oberfläche des Kugelzapfens 51 vor Korrosion, insbesondere hervorgerufen durch den Kontakt mit korrosiv wirkenden, flüssigen Medien, ist die Schutzkappe 1 zwischen der ersten Dichtfläche 16 und dem Boden 15 vollständig geschlossen ausgebildet.

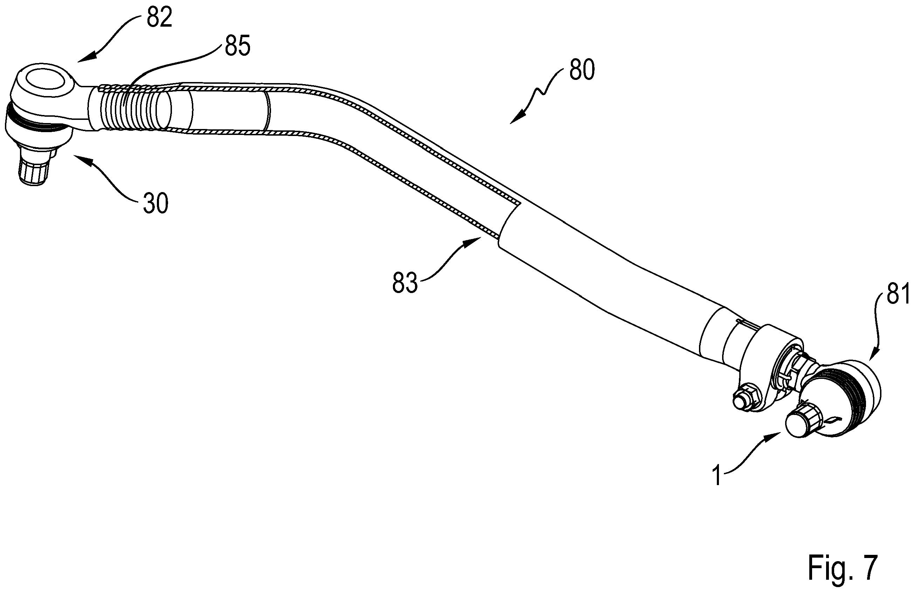

Fig. 7 zeigt einen als Lenkstange 80 ausgebildeten Zweipunktlenker, an welchen endseitig zwei komplett montierte Kugelgelenke 81, 82 wie zuvor beschrieben angeordnet sind. Die Kugelgelenke 81, 82 sind über ein Verbindungsrohr 83 miteinander verbunden. Zur bereichsweisen Abdeckung desselben ist auf das erste 81 der beiden Kugelgelenke eine Schutzkappe 1 gemäß dem zuvor beschriebenen und in Fig. 1 bis Fig. 3 dargestellten ersten Ausführungsbeispiel aufgeschraubt. Das erste Kugelgelenk 81 weist einen nur teilweise sichtbaren Schaft mit einem sich in dessen Längsrichtung erstreckenden Außengewinde auf. Das zweite 82 der beiden Kugelgelenke weist einen Schaft 85 auf, welcher mittels eines Warmeinschlagverfahrens mit dem Verbindungsrohr 83 verbunden ist. An dem Schaft 85 ist eine umlaufende Rillenstruktur ausgebildet. Während des Warmeinschlagens wird der zugehörige Endabschnitt des Verbindungsrohres 83 mit der Rillenstruktur in Eingriff gebracht. Um das zweite Kugelgelenk 82, insbesondere den nicht sichtbaren Dichtungsbalg 59 des zweiten Kugelgelenks 82, während des Warmeinschlagens vor einer Schädigung durch eine verfahrensbedingt an der Fügestelle auftretende Strahlungswärme zu schützen, ist auf das zweite Kugelgelenk 82 eine wärmeisolierend wirkende Schutzkappe 30 gemäß dem zuvor beschriebenen und in Fig. 4 dargestellten zweiten Ausführungsbeispiel aufgeschraubt. Die Kugelgelenke 81, 82 unterscheiden sich von dem zuvor genannten Kugelgelenk 50 lediglich in der Ausbildung ihres Schaftes.

### Bezugszeichen

- 1: Schutzkappe
- 2: Formtrennungsgrat
- 3: Mittellinie
- 4: Mehrkant, Zwölfkant
- 5: Flügel
- 6: Rippenstruktur
- 7: Rippenstruktur
- 8: Rippe
- 9: Rippe
- 10: Ablauföffnung
- 11: Innengewinde
- 12: Axialrichtung
- 13: unterer Abschnitt
- 14: oberer Abschnitt
- 15: Boden
- 16: erste Dichtfläche
- 17: Montageöffnung
- 18: Wandung
- 19: Innenumfangsfläche
- 20: Außenumfangsfläche
- 21: hohlzylindrischer Abschnitt
- 22: zweite Dichtfläche
- 23: Ausnehmung
- 24: Steg
- 25: Linienzug, Kreislinie
- 26: konischer Abschnitt
- 27: Ringspalt

- 30: Schutzkappe
- 33: oberer Abschnitt
- 34: Wandung der Schutzkappe
- 35: zusätzliche Wandung
- 36: Rippenstruktur
- 37: Rippe
- 38: Axialrichtung

- 50: Kugelgelenk
- 51: Kugelzapfen
- 53: Gewindeabschnitt
- 54: Außengewinde
- 55: Mittelachse
- 59: Dichtungsbalg
- 60: Spannring
- 61: Gehäuse
- 62: Gelenkkugel
- 64: konischer Abschnittt
- 65: unterer Endabschnitt
- 66: Schaft
- 67: zweite Kontaktfläche
- 68: dritte Kontaktfläche
- 69: erste Kontaktfläche

- 80: Zweipunktlenker, Lenkstange
- 81: erstes Kugelgelenk
- 82: zweites Kugelgelenk
- 83: Verbindungsrohr
- 85: Schaft

## Patentansprüche

1. Kugelgelenk (50) mit einem Kugelzapfen (51) und einer Schutzkappe (1, 30) zur bereichsweisen Abdeckung des komplett montierten Kugelgelenks (50), wobei die Schutzkappe (1, 30) mittels eines mehrfach umlaufend ausgebildeten Innengewindes (11) auf einen Gewindeabschnitt (53) des Kugelzapfens (51) des Kugelgelenks (50) aufgeschraubt ist und eine sich senkrecht zu ihrer Mittellinie (3) erstreckende, radial umlaufende erste Dichtfläche (16) zu einem Dichtungsbalg (59) des Kugelgelenks (50) aufweist, **dadurch gekennzeichnet, dass** die Schutzkappe (1, 30) in einem unteren Abschnitt (13), welcher sich von der ersten Dichtfläche (16) bis zu einem stirnseitigen Boden (15) der Schutzkappe (1, 30) erstreckt, vollständig geschlossen ausgebildet ist.

2. Kugelgelenk (50) nach Anspruch 1, **dadurch gekennzeichnet, dass** der Außenumfang der Schutzkappe (1, 30) zumindest eine Angriffsgeometrie (4, 5) aufweist, welche zur formschlüssigen Einleitung eines in Richtung des Außenumfangs wirkenden Drehmoments geeignet ist.

3. Kugelgelenk (50) nach Anspruch 2, **dadurch gekennzeichnet, dass** die Angriffsgeometrie als ein regelmäßiges Mehrkant (4) und/oder als zumindest ein Flügel (5) ausgebildet ist.

4. Kugelgelenk (50) nach einem der vorhergehenden Ansprüche, **dadurch gekennzeichnet, dass** die Schutzkappe (1, 30) zur Erhöhung der Steifigkeit bereichsweise durch zumindest eine Rippenstruktur (6, 7, 36) verstärkt ist.

5. Kugelgelenk (50) nach einem der vorhergehenden Ansprüche, **dadurch gekennzeichnet, dass** der Boden (15) unterbrechungsfrei durchgehend und mit gleichmäßiger Wandstärke ausgebildet ist.

6. Kugelgelenk (50) nach einem der vorhergehenden Ansprüche, **dadurch gekennzeichnet, dass** die Schutzkappe (1, 30) an ihrer Innenumfangsfläche (19) eine radial umlaufende zweite Dichtfläche (22) gegenüber dem Kugelzapfen (51) aufweist.

7. Kugelgelenk (50) nach Anspruch 6, **dadurch gekennzeichnet, dass** die zweite Dichtfläche (22) einen Endanschlag für das Aufschrauben der Schutzkappe (1, 30) auf den Kugelzapfen (51) bildet.

8. Kugelgelenk (50) nach einem der vorhergehenden Ansprüche, **dadurch gekennzeichnet, dass** die Schutzkappe (1, 30) zumindest eine Ablauföffnung (10) aufweist.

9. Kugelgelenk (50) nach einem der vorhergehenden Ansprüche, **dadurch gekennzeichnet, dass** die aufgeschraubte Schutzkappe (1, 30) einen Teil des Dichtungsbalges (59) freigibt.

10. Kugelgelenk (50) nach Anspruch 9, **dadurch gekennzeichnet, dass** der Dichtungsbalg (59) bei aufgeschraubter Schutzkappe (1, 30) durch diese, insbesondere durch die erste Dichtfläche (16) der Schutzkappe (1, 30), in Montageposition gehalten wird.

11. Zweipunktlenker (80) mit zumindest einem Kugelgelenk (81, 82) gemäß einem der vorhergehenden Ansprüche, **dadurch gekennzeichnet, dass** der Zweipunktlenker als Lenkstange (80), Spurstange, Stabilisator-Verbindungsstange, Bediengestänge oder Panhardstab ausgebildet ist.

## Claims

1. Ball joint (50) having a ball pivot (51) and a protective cap (1, 30) for covering regions of the completely assembled ball joint (50), the protective cap (1, 30) being screwed onto a threaded section (53) of the ball pivot (51) of the ball joint (50) by means of an internal thread (11) which is configured so as to run around it multiple times, and the said protective cap (1, 30) having a radially circumferential first sealing face (16) with respect to a sealing boot (59) of the ball joint (1, 30), which sealing face (16) extends perpendicularly with respect to the centre line (3) of the said protective cap (50), **characterized in that** the protective cap (1, 30) is of completely closed configuration in a lower section (13) which extends from the first sealing face (16) as far as an end-side bottom (15) of the protective cap (1, 30).

2. Ball joint (50) according to Claim 1, **characterized in that** the outer circumference of the protective cap (1, 30) has at least one action geometry (4, 5) which is suitable for the positively locking introduction of a torque which acts in the direction of the outer circumference.

3. Ball joint (50) according to Claim 2, **characterized in that** the action geometry is configured as a regular polygon (4) and/or as at least one fin (5).

4. Ball joint (50) according to one of the preceding claims, **characterized in that** the protective cap (1, 30) is reinforced at least in regions by way of at least one rib structure (6, 7, 36) in order to increase the rigidity.

5. Ball joint (50) according to one of the preceding claims, **characterized in that** the bottom (15) is of continuous configuration without interruptions, and is configured with a uniform wall thickness.

6. Ball joint (50) according to one of the preceding claims, **characterized in that**, on its inner circumferential face (19), the protective cap (1, 30) has a radially circumferential second sealing face (22) with respect to the ball pivot (51).

7. Ball joint (50) according to Claim 6, **characterized in that** the second sealing face (22) forms an end stop for screwing the protective cap (1, 30) onto the ball pivot (51).

8. Ball joint (50) according to one of the preceding claims, **characterized in that** the protective cap (1, 30) has at least one outflow opening (10).

9. Ball joint (50) according to one of the preceding claims, **characterized in that** the screwed-on protective cap (1, 30) releases a part of the sealing boot (59).

10. Ball joint (50) according to Claim 9, **characterized in that**, in the case of a screwed-on protective cap (1, 30), the sealing boot (59) is held in the assembled position by way of the said protective cap (1, 34), in particular by way of the first sealing face (16) of the protective cap (1, 30).

11. Two-point link (80) having at least one ball joint (81, 82) according to one of the preceding claims, **characterized in that** the two-point link is configured as a steering rod (80), a track rod, an anti-roll bar connecting rod, an operating linkage or a Panhard rod.

## Revendications

1. Articulation sphérique (50) comprenant un pivot sphérique (51) et un capuchon de protection (1, 30) destiné à recouvrir par endroits l'articulation sphérique (50) entièrement montée, le capuchon de protection (1, 30) étant vissé à l'aide d'un filetage interne (11), formé sur plusieurs tours, sur une partie filetée (53) du pivot sphérique (51) de l'articulation sphérique (50) et comportant une première surface d'étanchéité (16) radialement périphérique et s'étendant perpendiculairement à sa ligne médiane (3) pour former un soufflet d'étanchéité (59) de l'articulation sphérique (50), **caractérisée en ce que** le capuchon de protection (1, 30) est formé de manière complètement fermé dans une partie inférieure (13) qui s'étend de la première surface d'étanchéité (16) jusqu'à un fond d'extrémité (15) du capuchon de protection (1, 30).

2. Articulation sphérique (50) selon la revendication 1, **caractérisée en ce que** la périphérie extérieure du capuchon de protection (1, 30) présente au moins une géométrie d'engagement (4, 5) adaptée à l'introduction, par complémentarité de formes, d'un couple agissant dans la direction de la périphérie extérieure.

3. Articulation sphérique (50) selon la revendication 2, **caractérisée en ce que** la géométrie d'engagement est conçue sous la forme d'un polygone régulier (4) et/ou au moins sous la forme d'une aile (5).

4. Articulation sphérique (50) selon l'une des revendications précédentes, **caractérisée en ce que**, pour augmenter la rigidité, le capuchon de protection (1, 30) est renforcé par endroits par au moins une structure de nervures (6, 7, 36).

5. Articulation sphérique (50) selon l'une des revendications précédentes, **caractérisée en ce que** le fond (15) est conçu de manière continue sans interruption et avec une épaisseur de paroi uniforme.

6. Articulation sphérique (50) selon l'une des revendications précédentes, **caractérisée en ce que** le capuchon de protection (1, 30) comporte sur sa surface périphérique intérieure (19) une deuxième surface d'étanchéité (22), radialement périphérique, par rapport au pivot sphérique (51).

7. Articulation sphérique (50) selon la revendication 6, **caractérisée en ce que** la deuxième surface d'étanchéité (22) forme une butée d'extrémité destinée au vissage du capuchon de protection (1, 30) sur le pivot sphérique (51).

8. Articulation sphérique (50) selon l'une des revendications précédentes, **caractérisée en ce que** le capuchon de protection (1, 30) comporte au moins une ouverture d'évacuation (10).

9. Articulation sphérique (50) selon l'une des revendications précédentes, **caractérisée en ce que** le capuchon de protection (1, 30), une fois vissé, libère une partie du soufflet d'étanchéité (59).

10. Articulation sphérique (50) selon la revendication 9, **caractérisée en ce que**, une fois le capuchon de protection (1, 30) vissé, le soufflet d'étanchéité (59) est maintenu dans la position de montage par ledit capuchon d'étanchéité, notamment par la première surface d'étanchéité (16) du capuchon de protection (1, 30) .

11. Liaison à deux points (80) comprenant au moins une articulation sphérique (81, 82) selon l'une des revendications précédentes, **caractérisée en ce que** la liaison à deux points est conçue comme une barre de direction (80), une barre d'accouplement, une barre de liaison de stabilisateur, une tringlerie de commande ou une barre Panhard.
